(19) Europäisches Patentamt
European Patent Office
Office européen des brevets

(11) EP 3 085 059 B1

# (12) EUROPEAN PATENT SPECIFICATION

(45) Date of publication and mention of the grant of the patent: **14.08.2019 Bulletin 2019/33**

(21) Application number: **14818943.4**

(22) Date of filing: **16.12.2014**

(51) Int Cl.:
***H04L 29/06*** *(2006.01)* ***H04L 12/26*** *(2006.01)*
***H04L 29/08*** *(2006.01)*

(86) International application number:
**PCT/EP2014/078041**

(87) International publication number:
**WO 2015/091534 (25.06.2015 Gazette 2015/25)**

## (54) SYSTEM AND METHOD FOR DYNAMICALLY SCHEDULING NETWORK SCANNING TASKS

SYSTEM UND VERFAHREN ZUR DYNAMISCHEN PLANUNG VON NETZWERKABTASTUNGSAUFGABEN

SYSTÈME ET PROCÉDÉ DE PROGRAMMATION DYNAMIQUE DE TÂCHES DE BALAYAGE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 US 201314132968**

(43) Date of publication of application:
**26.10.2016 Bulletin 2016/43**

(73) Proprietor: **Camelot UK Bidco Limited**
**London**
**SW1Y 6LB (GB)**

(72) Inventors:
- **HABDANK, Jozef**
  **DK-2920 Charlottenlund (DK)**
- **LOEKKEGAARD, Kristian**
  **DK-1656 Copenhagen V (DK)**

(74) Representative: **Gill Jennings & Every LLP**
**The Broadgate Tower**
**20 Primrose Street**
**London EC2A 2ES (GB)**

(56) References cited:
**US-B1- 7 987 172 US-B1- 8 255 385**

- **KRYCZKA M ET AL: "Measuring the bittorrent ecosystem: Techniques, tips, and tricks", IEEE COMMUNICATIONS MAGAZINE, IEEE SERVICE CENTER, PISCATAWAY, US, vol. 49, no. 9, 1 September 2011 (2011-09-01), pages 144-152, XP011506969, ISSN: 0163-6804, DOI: 10.1109/MCOM.2011.6011746**
- **ANDRADE N ET AL: "Resource demand and supply in BitTorrent content-sharing communities", COMPUTER NETWORKS, ELSEVIER SCIENCE PUBLISHERS B.V., AMSTERDAM, NL, vol. 53, no. 4, 18 March 2009 (2009-03-18) , pages 515-527, XP025913953, ISSN: 1389-1286, DOI: 10.1016/J.COMNET.2008.09.029 [retrieved on 2008-11-21]**
- **Yeounoh Chung: "Torrent Crawler: a tool for collecting information from BitTorrent networks", Final Projects CS 6464: Spring 2009 Advanced Distributed Storage Systems, 20 May 2009 (2009-05-20), XP055173982, Department of Computer Science , Cornell University Retrieved from the Internet: URL:http://www.cs.cornell.edu/courses/cs6464/2009sp/projects/yc336/final_doc.pdf [retrieved on 2015-03-05]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 085 059 B1

- **MASAHIRO YOSHIDA ET AL: "A Resource-Efficient Method for Crawling Swarm Information in Multiple BitTorrent Networks", AUTONOMOUS DECENTRALIZED SYSTEMS (ISADS), 2011 10TH INTERNATIONAL SYMPOSIUM ON, IEEE, 23 March 2011 (2011-03-23), pages 497-502, XP031936964, DOI: 10.1109/ISADS.2011.72 ISBN: 978-1-61284-213-4**

## Description

CROSS-REFERENCE TO RELATED APPLICATIONS

This application claims the benefit of U.S. Application No. 14/132,968, filed on December 18, 2013.

BACKGROUND

Owners of copyrights in electronic items (e.g., digital songs, movies, books, and/or the like) often are interested in gaining statistical insight into the scope of online piracy associated with those electronic items. Conventional anti-piracy services may identify and capture, on a network, a set of network identifiers (e.g., device identifiers and/or network locations that represent users and/or devices) from a "swarm," which may refer to, for example, all entities illegally accessing an electronic item such as, for example, a movie. The set of captured network identifiers is generally only a portion of the swarm and conveys only a snapshot in time of the activities taking place by the network identifiers.

KRYCZKA M ET AL: "Measuring the bittorrent ecosystem: Techniques, tips, and tricks", IEEE COMMUNICATIONS MAGAZINE, IEEE SERVICE CENTER, PISCATAWAY, US, vol. 49, no. 9, 1 September 2011 (2011-09-01), pages 144-152, XP011506969, ISSN: 0163-6804, DOI: 10.1109/MCOM.2011.6011746 discloses the main aspects and functionality of the complete BitTorrent Ecosystem, and presents a survey of the existing BitTorrent measurement techniques, and the challenges that these techniques face and the possible solutions to them.

SUMMARY

Embodiments of the present invention facilitate dynamically adjusting an execution frequency of scheduled network scanning tasks based on scan results. For example, scanning servers may be scheduled to repeatedly execute a network scanning task to detect, on a network, activities associated with an electronic item, such as the downloading of a suspected illegal copy of a movie. Information associated with the activities (e.g., network identifiers corresponding to network locations and/or devices (e.g., associated with users) involved in the activities, the types of activities, and/or the like) may be captured and analyzed. For example, the information generated by each execution of a scanning task may be analyzed along with information generated by previous executions of the scanning task. An execution frequency, which refers to a length of a time interval between successive executions of a scanning task, may be dynamically adjusted based on the results of the analysis. In embodiments, in the course of successive executions of a scanning task in which little redundancy is detected regarding, e.g., specific users associated with an activity, the execution frequency is increased to obtain a better sense for the number and composition of the users. Similarly, the frequency may be decreased when significant redundancy is detected.

In particular, embodiments of the present invention include a computer-implemented method for dynamically scheduling network scanning tasks. In embodiments, the method includes receiving an identification of a scanning task associated with an electronic item. A scanning task associated with the electronic item is scheduled to be repeatedly executed according to an execution frequency. The execution frequency corresponds to a time interval between each execution. Embodiments of the method further include receiving a first set of scan results generated by a first execution, at a first execution time, of the scanning task and receiving a second set of scan results generated by a second execution, at a second execution time, of the scanning task. The first and second sets of scan results may include information (e.g., network identifiers) associated with first and second sets of observed activities associated with the electronic item, respectively. The first and second sets of scan results are analyzed and the execution frequency is modified based on the analysis.

Embodiments of the invention include another computer-implemented method for dynamically scheduling network scanning tasks. In embodiments, the method includes receiving an identification of a scanning task associated with an electronic item and scheduling a first execution of the scanning task for a first execution time. The first execution of the scanning task is performed at the first execution time and a second execution of the scanning task is scheduled for a second execution time. In embodiments, the first execution time and the second execution time may be separated by a time interval having a length that is based on an execution frequency. According to embodiments, the method further includes receiving a first set of scan results generated by the first execution of the scanning task. The first set of scan results may include a first set of network identifiers associated with a first set of detected activities associated with the electronic item.

The method may further include performing the second execution of the scanning task at the second execution time and scheduling a third execution of the scanning task for a third execution time, which may be separated from the second execution time by a time interval having a length that is based on the execution frequency. In embodiments, the method further includes receiving a second set, *Cn,* of scan results (e.g., a second set of network identifiers associated with a second set of detected activities associated with the electronic item) generated by the second execution of the scanning task. A task scheduler may determine a number, $K(C_n)$, of captured network identifiers in the second set of scan results and may determine a number, $R_n$, of recaptured network identifiers based on a comparison of the first set of network identifiers with a list, $M_n$, of previously captured network identifiers. The list, $M_n$, of previously captured network identifiers may include at least the first set of network identifiers. According to embodiments of the method, a modified execution frequency may be determined based on $R_n$ and $N(C_n)$, and the task scheduler may reschedule the third execution of the scanning task for a fourth execution time, based on the modified frequency.

In embodiments, a system for monitoring network activities includes a scanning server configured to execute a network scanning task associated with an electronic item that is accessible via a network; and a management server configured to manage the network scanning task associated with the electronic item. The management server may be configured to receive, from the scanning server, a set of scan results generated by a first execution, at a first time, of the network scanning task. The set of scan results may include a set of network identifiers. In embodiments, the management server includes a processor that instantiates a plurality of software components stored in a memory.

According to embodiments, the plurality of software components includes a task scheduler configured to: (a) schedule a second execution of the network scanning task for a second time, where the second execution is scheduled based on an execution frequency, (b) analyze the set of scan results generated by the first execution, where the task scheduler is configured to compare the set of network identifiers with a list of previously captured network identifiers, and (c) modify the execution frequency based at least on the comparison. The plurality of software components may further include a services component configured to facilitate a network activity-monitoring service based on the network scanning task.

## BRIEF DESCRIPTION OF THE DRAWINGS

FIG. 1 is a block diagram illustrating an operating environment (and, in some embodiments, aspects of the present invention) in accordance with embodiments of the present invention;

FIG. 2 is a flow diagram depicting an illustrative method of dynamically scheduling executions of a network scanning task in accordance with embodiments of the present invention;

FIG. 3 is a flow diagram depicting an illustrative method of dynamically adjusting an execution frequency used for scheduling executions of a network scanning task in accordance with embodiments of the present invention;

FIG. 4 is a schematic diagram depicting an illustrative method of determining a time interval corresponding to an execution frequency used for scheduling executions of a network scanning task in accordance with embodiments of the present invention;

FIG. 5 is a flow diagram depicting another illustrative method of dynamically adjusting an execution frequency used for scheduling executions of a network scanning task in accordance with embodiments of the present invention;

FIG. 6 is a schematic diagram depicting another illustrative method of determining a time interval corresponding to an execution frequency used for scheduling executions of a network scanning task in accordance with embodiments of the present invention;

FIG. 7 is a flow diagram depicting another illustrative method of dynamically scheduling executions of a network scanning task in accordance with embodiments of the present invention; and

FIG. 8 is a flow diagram depicting another illustrative method of dynamically scheduling executions of a network scanning task in accordance with embodiments of the present invention.

While the present invention is amenable to various modifications and alternative forms, specific embodiments have been shown by way of example in the drawings and are described in detail below. The present invention, however, is not limited to the particular embodiments described. On the contrary, the present invention is intended to cover all modifications, equivalents, and alternatives falling within the ambit of the present invention as defined by the appended claims.

Although the term "block" may be used herein to connote different elements illustratively employed, the term should not be interpreted as implying any requirement of, or particular order among or between, various steps disclosed herein unless and except when explicitly referring to the order of individual steps.

## DETAILED DESCRIPTION

Embodiments of the present innovation relate to services that monitor network activities (e.g., downloads, uploads, sharing actions, and/or the like) associated with an electronic item by executing a network scanning task at a given frequency and dynamically adjusting the frequency at which the scanning task is executed based on results of executions of the scanning task. In this manner, the services may more efficiently allocate monitoring resources, as well as optimize scanning task execution to collect information that may be useful, for example, in estimating the size of a swarm corresponding to activities associated with the electronic item. For example, if a new set of captured network identifiers (e.g., device identifiers representing user devices or uniform resource locators (URLs) representing hyperlinks) from the swarm significantly overlaps a list of previously identified identifiers (i.e., a significant number and/or percentage of network identifiers were "recaptured" in the new set), the swarm may be fairly "static" in nature, whereas if there is very little overlap, the swarm may be changing rapidly. Embodiments of the present invention facilitate swarm sampling that scales by estimated swarm size, thereby potentially improving the efficiency of monitoring resources and yielding a more representative sample of the swarm.

Further, embodiments of the present invention facilitate scheduling executions of successful scanning tasks more often than unsuccessful scanning tasks. A scanning task execution may be deemed to be "successful" when the results include a set of unique network identifiers that have not been captured by one of a predetermined number of prior scanning task executions or by one of a number of scanning task executions performed within a certain time period. Additionally, embodiments of the present invention include a task scheduler that may be used with any number of different types of systems envisioned for use herein. The task scheduler can, for example, receive task identifiers corresponding to scanning tasks and schedule execution of those scanning tasks without regard to the type of task. Therefore, embodiments of the task identifier may be compatible with different types of systems, scanning tasks, monitoring services, and/or the like.

As indicated previously, embodiments of the present invention facilitate dynamic scheduling of network scanning tasks associated with electronic items and include, for example, dynamically modifying a frequency of execution of a particular network scanning task. A network scanning task may include, for example, a set of instructions (e.g., computer-readable instructions) that cause a scanning server to scan one or more networks (e.g., the Internet and/or peer-to-peer (P2P) networks), network locations (e.g., URLs), and/or network devices (e.g., web servers, media servers, and/or user devices) to detect activities associated with a particular electronic item. A scanning task may also include instructions for retrieving (i.e., capturing) certain types of information (e.g., network identifiers) associated with detected activities. In embodiments, the electronic item may be, or include, any number of different types of items such as, for example, an electronic file, a copy of an electronic file, an electronic document, a copy of an electronic document, and/or the like. For example, electronic files may include multimedia files (e.g., songs, movies, and/or pictures), electronic books, and/or the like.

For example, a scanning task might include instructions that, when executed by a scanning server, cause the scanning server to scan a decentralized distributed network (e.g., a P2P network such as BitTorrent™) or a centralized client-server network (e.g., an internetwork such as the Internet) to detect unauthorized activities associated with an electronic item. For example, a scanning server may search, using a peer-to-peer networking protocol (e.g., the BitTorrent™ protocol), within a P2P network to identify a content hash associated with a particular electronic item and, upon detecting the hash, may inspect network activity to capture network identifiers (e.g., IP addresses) corresponding to devices performing activities associated with the hash. In another example, a scanning server may utilize an Internet search engine (e.g., Google®) to search web servers connected to the Internet for network identifiers (e.g., URLs) that provide unauthorized access to the electronic item.

In embodiments, a scanning server may detect activities associated with an electronic item such as instances of the electronic item being uploaded, downloaded, copied, shared, accessed, and/or the like. For example, a customer of a provider of services facilitated by the present invention may wish to obtain information about unauthorized activities associated with a particular movie (e.g., a movie in which the customer has copyright interests). The service provider may create a network scanning task that is configured to cause scanning servers to scan various networks to detect unauthorized activities (e.g., unauthorized copying or downloading) associated with the movie. The service provider may schedule the network scanning task to be repeatedly executed by scanning servers, which may detect instances of, and capture information associated with, these activities.

Although the term "activities" may relate to any type of activity associated with an electronic item, the particular example of unauthorized access of an electronic item will be used throughout this disclosure to illuminate various aspects of embodiments of the present invention. References to unauthorized access of electronic items, in lieu of other types of activities, are not meant to imply any limitation of the scope of the term "activities," but are used solely for purposes of explanation.

Upon detecting any activities of interest (e.g., unauthorized downloads, providing access to the electronic item via an unauthorized uniform resource locator (URL), and/or the like), the scanning server may, in accordance with the scanning task, capture network identifiers such as, for example, internet protocol (IP) addresses associated with user devices that are involved in the activities, port numbers associated with user devices that are involved in the activities, combinations of IP addresses and port numbers, URLs corresponding to hyperlinks to the electronic item, and/or the like. The set of network identifiers captured by the scanning server may be provided to a management server, which may facilitate providing any number of various services, based on the set of network identifiers, to the customer. For example, the management server may use the set of network identifiers, in conjunction with additional sets of network identifiers from additional executions of the scanning task, to estimate the size of a swarm involved with certain activities associated with the electronic item.

Although the term "network identifiers," in the context of information associated with detected activities, may relate to any type of identifying and/or locating information associated with an entity or activity, the particular example of IP addresses (a particular type of network identifier) will be used throughout this disclosure to illuminate various aspects of embodiments of the present invention. References to IP addresses, in lieu of other types of network identifiers (e.g., media access control (MAC) addresses, port numbers, URLs, etc.), are not meant to imply any limitation of the scope of the term "network identifiers," but are used solely for purposes of example.

In embodiments, a swarm may refer to a population of network identifiers corresponding to links, servers, users and/or user devices involved with a specified activity associated with an electronic item. For example, in the case of activities on a P2P network, a swarm may include all of the IP addresses corresponding to users/devices downloading an electronic item (e.g., a movie) at a given time or during a certain time period. In the case of activities on the Internet, a swarm may include, e.g., all of the URLs corresponding to hyperlinks to the electronic item that are accessible at a given time or during a certain time period. In embodiments, a swarm may be defined "globally" (e.g., all of the network identifiers corresponding to users/devices throughout the world downloading a certain movie at a given time) or "locally" (e.g., all of the device identifiers corresponding to users downloading the movie via BitTorrent™, or in the United States, at a given time).

As discussed above, characteristics of a swarm (e.g., the number of identifiers in the swarm, the types of activities associated with identifiers in the swarm, and/or the like) and changes, over time, in those characteristics may be difficult to determine directly and, instead, may be estimated using statistical analysis of samples of the swarm. Specifically, the statistical analysis may be enhanced by dynamically adjusting the frequency at which a scanning task is executed, thereby facilitating executing the scanning task according to a frequency that is related to the network activity (e.g., the number of entities in the swarm at a given time). In embodiments, this dynamic adjustment may include dynamically estimating the total swarm size by analyzing information obtained from consecutive executions of the scanning task. In other embodiments, efficiency may be enhanced by dynamically adjusting the execution frequency without first estimating the total swarm size.

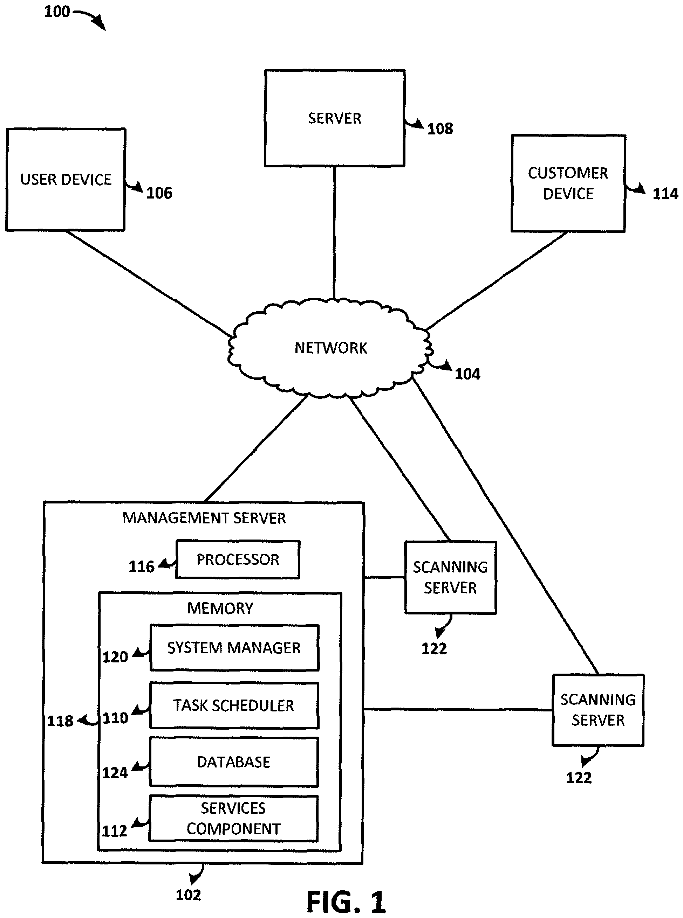

FIG. 1 depicts an example of an operating environment 100 (and, in some embodiments, aspects of the present invention) in accordance with embodiments of the present invention. As shown in FIG. 1, the operating environment 100 includes a management server 102 that processes information about activities associated with electronic items, accessed via a network 104, on or accessed/controlled by a user device 106 and/or a server 108. The network 104 may be, or include, any number of different types of communication networks such as, for example, a short messaging service (SMS), a local area network (LAN), a wireless LAN (WLAN), a wide area network (WAN), the Internet, a P2P network, and/or the like. The network 104 may include a combination of multiple networks. According to embodiments, the management server 102 implements a task scheduler 110 that uses information about activities associated with an electronic item to dynamically schedule executions of a scanning task associated with the electronic item.

The task scheduler 110 may utilize information obtained from one or more executions of a scanning task to dynamically schedule an additional execution of the scanning task. The information may include a network identifier such as, for example, a device identifier (e.g., a MAC address or an IP address) associated with a user device 106, a location identifier (e.g., a URL) corresponding to a hyperlink hosted by a server 108, and/or the like. The user device 106 may include, for example, a computing device used by a user to perform an activity associated with an electronic item, such as by sharing the item, uploading the item, copying the item, downloading the item, or otherwise accessing the item. In embodiments, the operating environment 100 may include a number of user devices 106. The server 108 may include, for example, a web server that performs an activity associated with an electronic item, such as by providing one or more hyperlinks or URLs through which the electronic item may be accessed. In embodiments, the activity that the scanning task is configured to detect may be authorized or unauthorized. In embodiments, the operating environment 100 may include a number of servers 108. The management server 102 may use the results of scanning task executions to facilitate any number of services such as, for example, by utilizing a services component 112, which a consumer of the services may access with a customer device 114.

As shown in FIG. 1, the management server 102 may be implemented on a computing device that includes a processor 116 and a memory 118. Although the management server 102 is referred to herein in the singular, the management server 102 may be implemented in multiple server instances (e.g., as a server cluster), distributed across multiple computing devices, instantiated within multiple virtual machines, and/or the like. The task scheduler 110 may be stored in the memory 118. In embodiments, the processor 116 executes the task scheduler 110, which may facilitate dynamic scheduling of executions of a network scanning task associated with an electronic item. As indicated above, the electronic item may be, or include, any number of different types of electronic media accessible by users over the network 104 such as, for example, documents, movies, and/or the like. Scanning tasks associated with the electronic items may relate to operations involving searching one or more networks, servers and/or user devices to detect activities associated with the electronic items, and capturing information associated with the detected activities.

Still referring to FIG. 1, the management server 102 includes a system manager 120 that manages operations of a number of scanning servers 122. The scanning servers 122 may be implemented using any number of different computing devices. For example, the management server 102 and the scanning servers 122 may be included within a server cluster implemented using a single computing device, multiple computing devices, one or more virtual machines, and/or the like. In embodiments, the system manager 120 may provide functions such as allocating resources (e.g., assigning particular scanning tasks and/or scanning task executions to particular scanning servers 122 (e.g., for load-balancing); collecting and analyzing server performance feedback information; scaling the number of scanning servers 122 available for tasks; and/or the like), facilitating user input (e.g., providing interfaces for creating scanning tasks, managing operations of various components of the service, and/or the like), and facilitating system maintenance.

The scanning servers 122 execute scanning tasks, and thereby capture (obtain, copy, or otherwise access) information associated with electronic items. The system manager 120 may store the information, portions of the information, and/or data extracted from the information in the memory 118 and may, for example, index the information using a database 124. The database 124 may be, or include, one or more tables, one or more relational databases, one or more multi-dimensional data cubes, and/or the like. Further, though illustrated as a single component implemented in the memory 118, the database 124 may, in fact, be a plurality of databases 124 such as, for instance, a database cluster, which may be implemented on a single computing device or distributed between a number of computing devices, memory components, or the like.

In operation, the task scheduler 110 accesses activity information (e.g., from the database 124, the system manager 120, the scanning servers 122, and/or the like) and, based on the activity information, dynamically schedules further executions of scanning tasks such as, for example, by placing the executions in a time-based queue. The system manager 120 may be configured to determine which of the scanning servers 122 will perform each scanning task execution, thereby facilitating dynamic load-balancing.

According to embodiments, various components of the operating environment 100, illustrated in FIG. 1, may be implemented on one or more computing devices. A computing device may include any type of computing device suitable for implementing embodiments of the invention. Examples of computing devices include specialized computing devices or general-purpose computing devices such "workstations," "servers," "laptops," "desktops," "tablet computers," "hand-held devices," and the like, all of which are contemplated within the scope of FIG. 1 with reference to various components of the operating environment 100.

In embodiments, a computing device includes a bus that, directly and/or indirectly, couples the following devices: a processor, a memory, an input/output (I/O) port, an I/O component, and a power supply. Any number of additional components, different components, and/or combinations of components may also be included in the computing device. The bus represents what may be one or more busses (such as, for example, an address bus, data bus, or combination thereof). Similarly, in embodiments, the computing device may include a number of processors, a number of memory components, a number of I/O ports, a number of I/O components, and/or a number of power supplies. Additionally any number of these components, or combinations thereof, may be distributed and/or duplicated across a number of computing devices.

In embodiments, the memory 118 includes computer-readable media in the form of volatile and/or nonvolatile memory and may be removable, nonremovable, or a combination thereof. Media examples include Random Access Memory (RAM); Read Only Memory (ROM); Electronically Erasable Programmable Read Only Memory (EEPROM); flash memory; optical or holographic media; magnetic cassettes, magnetic tape, magnetic disk storage or other magnetic storage devices; data transmissions; or any other medium that can be used to store information and can be accessed by a computing device such as, for example, quantum state memory, and the like. In embodiments, the memory 118 stores computer-executable instructions for causing the processor 116 to implement aspects of embodiments of system components discussed herein and/or to perform aspects of embodiments of methods and procedures discussed herein. Computer-executable instructions may include, for example, computer code, machine-useable instructions, and the like such as, for example, program components capable of being executed by one or more processors associated with a computing device. Examples of such program components include the task scheduler analyzer 110, the services component 112, the system manager 120, and the database 124. Some or all of the functionality contemplated herein may also be implemented in hardware and/or firmware.

The illustrative operating environment 100 shown in FIG. 1 is not intended to suggest any limitation as to the scope of use or functionality of embodiments of the present invention. Neither should the illustrative operating environment 100 be interpreted as having any dependency or requirement related to any single component or combination of components illustrated therein. Additionally, any one or more of the components depicted in FIG. 1 may be, in embodiments, integrated with various ones of the other components depicted therein (and/or components not illustrated), all of which are considered to be within the ambit of the present invention. For example, the scanning servers 122 may be integrated with the management server 102.

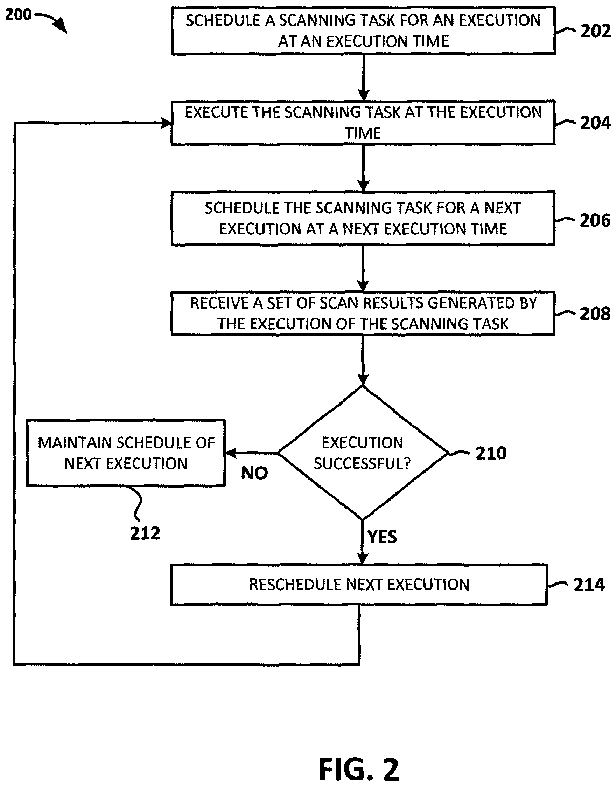

As described above, in embodiments, a task scheduler (e.g., the task scheduler 110 depicted in FIG. 1) may analyze sets of scan results generated by consecutive executions of a scanning task to dynamically adjust an execution frequency used for scheduling subsequent executions of the scanning task. The scan results may include information such as network identifiers (e.g., IP addresses or URLs) corresponding to detected activities associated with an electronic item. FIG. 2 depicts an illustrative process that may be performed by a service provider that implements, for example, a management server (e.g., the management server 102 depicted in FIG. 1), a task scheduler (e.g., the task scheduler 110 depicted in FIG. 1) and one or more scanning servers (e.g., the scanning servers 122 depicted in FIG. 1). The management server may manage the functions performed by a number of scanning servers to facilitate load-balancing with respect to large numbers of scanning tasks. In embodiments, the functions performed by the scanning servers may be performed by the management server. A scanning task may be created by a user, automated process, and/or the like. The scanning task may be provided to the task scheduler and, upon receiving the scanning task, the task scheduler schedules the scanning task for an execution at an execution time (block 202). The task scheduler may schedule the scanning task for execution, for example, by placing the task (or an identification of the task) in a unique time queue. One or more scanning servers execute the scanning task at the execution time (block 204), and the task scheduler schedules the scanning task for a next execution at a next execution time (block 206). In embodiments, the task scheduler may schedule the next execution as soon as execution of the scanning task begins. The next execution time may be determined, for example, based on an execution frequency. The execution frequency refers to a length of a time interval between consecutive executions of the scanning task. In embodiments, the task scheduler initially schedules the next execution of the scanning task for an execution time that is separated from the most recent execution by a time interval having a predetermined maximum length, $T_{max}$. For example, in an implementation, $T_{max}$ may be 60 minutes.

As shown in FIG. 2, the task scheduler receives a set of scan results generated by the execution of the scanning task (block 208) and determines whether the execution was successful (block 210). In embodiments, a scanning task execution is successful when it captures network identifiers that have not been previously captured within a predetermined amount of time or number of scanning tasks. For example, the task scheduler may reference a list of network identifiers that have been captured within the past 24 hours and compare the network identifiers in that list to the network identifiers captured in the most recent execution of the scanning task. If there are any (or, in embodiments, at least a significant number or percentage of) network identifiers captured in the most recent execution that are not also in the list, the execution of the scanning task may be deemed successful.

As depicted in FIG. 2, if the execution was not successful, the task scheduler maintains the schedule of the next execution of the scanning task (block 212). That is, for example, the next execution of the scanning task may remain scheduled for a next execution time that is separated from the most recent execution by $T_{max}$. If the execution was successful, however, the task scheduler reschedules the next execution of the scanning task (block 214), and, as shown in FIG. 2, the process 200 repeats. In embodiments, the task scheduler may reschedule the next execution for an execution time that is separated from the most recent execution time by a time interval having a length that is less than $T_{max}$. The length of the time interval may be determined based on an analysis of the results of the most recent execution of the scanning task. In this manner, successful scanning tasks are executed more frequently than unsuccessful scanning tasks, thereby increasing the possibility of capturing more representative samples of the relevant swarm.

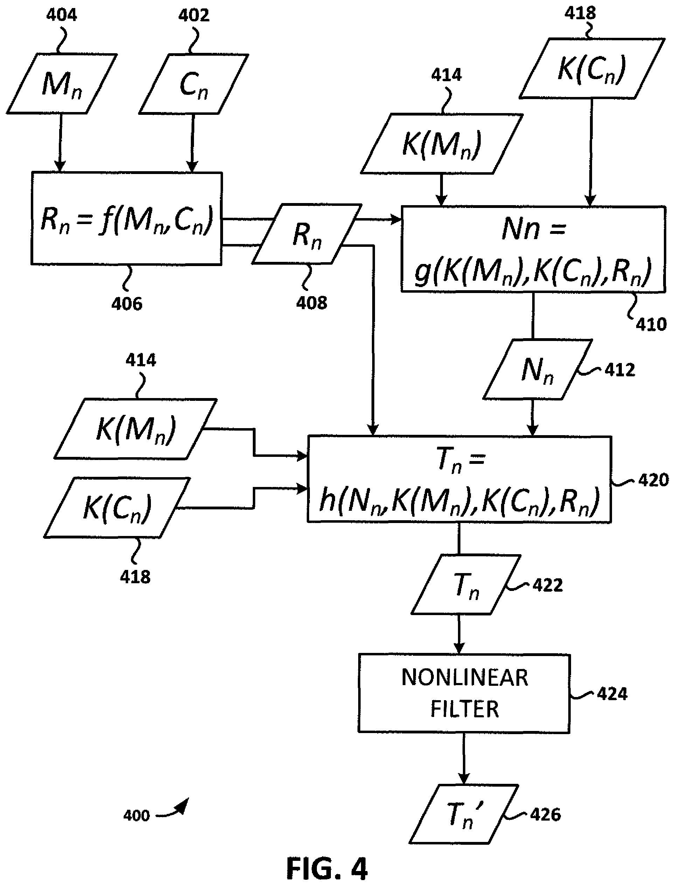

In embodiments, the task scheduler may be configured to take into account trends associated with executions of the scanning task when dynamically adjusting the execution frequency. The task scheduler may be configured to access, from memory (e.g., the database 124 depicted in FIG. 1), historical information regarding executions of the scanning task. For example, though a most recent scanning task execution may have been unsuccessful (e.g., captured only network identifiers that had been previously captured), if a number of the prior executions of the scanning task were largely successful, the task scheduler may be configured to decrease the execution frequency by a smaller amount than it would if the prior executions were less successful. Similarly, the task scheduler may be configured to increase scanning frequency at a rate that may be based on historical performance of the scanning task. In embodiments, features such as these may be incorporated into algorithms performed by the task scheduler and/or by employing filters on the output of the task scheduler (e.g., the nonlinear filter 424 depicted in FIG. 4).

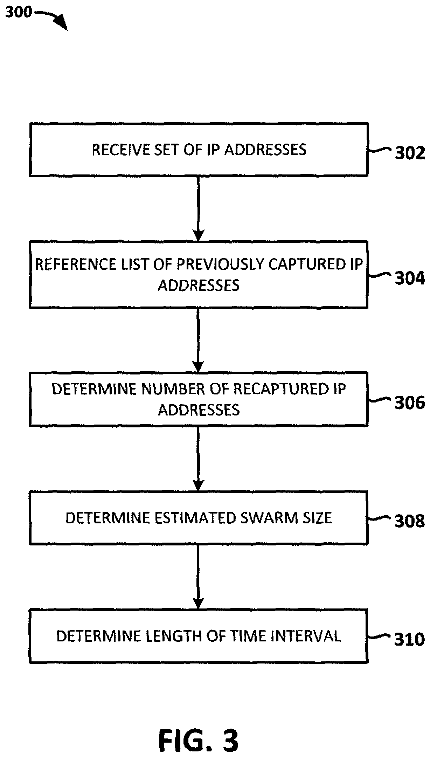

FIGS. 3-6 depict illustrative methods and processes associated with dynamical adjustment of an execution frequency. In FIGS. 3-6, and the accompanying description, the examples are described in the context of a scanning task configured to cause one or more scanning servers (e.g., the scanning servers 122 depicted in FIG. 1) to capture IP addresses corresponding to devices used for performing activities associated with an electronic item. As explained above, these examples are used for purposes of clarity and embodiments of the methods depicted in FIGS. 3-6 may be used with scanning tasks configured, for example, to capture other types of information (e.g., types of activities, MAC identifiers, port numbers, URLs, and/or the like) associated with various types of activities.

FIG. 3 is a flow diagram depicting an illustrative method 300 of dynamically adjusting an execution frequency used for scheduling executions of a network scanning task. In embodiments, aspects of the method 300 may be performed by a task scheduler (e.g., the task scheduler 110 depicted in FIG. 1). As shown in FIG. 3, embodiments of the illustrative method 300 include receiving a set of IP addresses (block 302). The set of IP addresses may be captured during an execution of a network scanning task associated with an electronic item. The task scheduler references a list of previously captured (i.e., captured prior to the capturing of the set mentioned in block 302) IP addresses (block 304) and determines the number of "recaptured" IP addresses (block 306). As shown in FIG. 3, the method 300 further includes determining an estimated swarm size (block 308). The task scheduler may determine, based at least on the estimated swarm size, a length of a time interval used for scheduling a subsequent execution time for the scanning activity (block 310). As indicated above, an insignificant number or percentage of recaptured infringing IP addresses may result in a decreased length of the time interval.

FIG. 4 is a schematic diagram depicting an illustrative process flow 400 for determining a time interval corresponding to an execution frequency used for scheduling executions of a network scanning task. The functions depicted in FIG. 4 and discussed below may represent computer algorithms implemented as computer-readable instructions. In FIG. 4, $C_n$ (402) represents a list of unique IP addresses captured in a most recent execution (execution "*n*") of a scanning task and $M_n$ (404) represents a list of unique IP addresses captured in previous executions of the scanning task. According to embodiments, each time a set of scan results is received, all of the unique IP addresses contained in the set that are not already included in the list, $M_n$ (404), are added to the list, $M_n$ (404). The list, $M_n$ (404), of IP addresses may include IP addresses from a certain number of scanning task executions, from scanning task executions corresponding to a certain range of time, and/or the like. For example, in embodiments, the list, $M_n$ (404), may include all of the unique IP addresses captured by executions of a scanning task occurring during an immediately preceding 24-hour period.

As shown in FIG. 4, a function, $f(M_n\ C_n)$ (406) is used to determine a number, $R_n$ (408), of recaptured IP addresses. In embodiments, the number, $R_n$ (408), of recaptured IP addresses includes the number of unique IP addresses that were captured both in a most recent execution of the scanning task and a previous execution of the scanning task - e.g., the number of unique IP addresses appearing both in the set, $C_n$ (402), of captured IP addresses and the list $M_n$ (404) of previously captured IP addresses. In embodiments, the function, $f(M_n, C_n)$ (406), includes a simple look-up and compare function that is utilized by accessing, from a database in memory (e.g., the database 124 maintained in the memory 118 depicted in FIG. 1), the list, *Mn* (404), and comparing the IP addresses in the set, $C_n$ (402), of IP addresses to the IP addresses included within the list, $M_n$ (404). The function, $f(M_n, C_n)$ (406), generates a count of the number of IP addresses contained in both the set, $C_n$ (402), and the list, $M_n$ (404), and outputs that count as the number, $R_n$ (308), of recaptured IP addresses.

As is further depicted in FIG. 4, the number, $R_n$ (408), of recaptured IP addresses is provided as input to a function, $g(K(M_n), K(C_n), R_n)$ (410), which is used to determine an estimated swarm size, $N_n$ (412). The function, $g(K(M_n), K(C_n), R_n)$ (410) also takes as input the number, $K(M_n)$ (414), of captured IP addresses included in the list, $M_n$ (404), as well as the number, $K(C_n)$ (418), of IP addresses captured in the most recent execution of the scanning task. The function, $g(K(M_n), K(C_n), R_n)$ (410), may include any number of different types of statistical algorithms such as, for example, a Lincoln-Petersen algorithm, a Chapman Estimator, and/or the like. In embodiments, the swarm may be modeled and estimated using other statistical techniques such as, for example, a Poisson distribution. The estimated swarm size, $N_n$ (412), may be used in providing network activity-monitoring services (e.g., anti-piracy services) via a services component (e.g., the services component 112 depicted in FIG. 1). The services component may provide reports to a customer that include estimated swarm sizes corresponding to various electronic items, characteristics of swarms, network locations, activities associated with electronic items, and/or the like.

Additionally, as shown in FIG. 4, the estimated swarm size, $N_n$ (412), may be provided as input to a function, $h(N_n, K(M_n), K(C_n), R_n)$ (420), that is used to determine a length, $T_n$ (422), of a time interval to be established between the execution time of the most recent scanning task execution and the execution time of the next scanning task execution. The function, $h(N_n, K(Mn), K(C_n), R_n)$ (420), also takes as input the number, $K(M_n)$(414), of captured IP addresses included in the list, $M_n$ (404); the number, $K(C_n)$ (418), of IP addresses captured in the most recent execution of the scanning task; and the number, $R_n$ (408), of recaptured IP addresses. In embodiments, the function, $h(N_n, K(M_n), K(Cn), R_n)$ (420), may utilize any number of different types of statistical estimators, optimization functions, and/or the like. A nonlinear filter 424 may be used to remove errors in the calculated length, $T_n$ (422). That is, the initially calculated length, $T_n$ (422) may be provided as input to the nonlinear filter 424, which applies one or more filtering functions to generate a filtered length, $T_n$'(426), which may be used to determine the next execution time for scheduling the next execution of the scanning task. According to embodiments, the nonlinear filter 424 may filter upward and/or downward spikes in the calculated values of $T_n$ (422) that may occur as a result of errors, sudden changes in the relative success of executions of the scanning task, and/or the like. The nonlinear filter 424 may use any number of various types of approaches including, for example, filtering functions that utilize a Rayleigh distribution, a skewed normal distribution, and/or the like. Additionally, the nonlinear filter 424 may be a two-state filter and may include any number of filtering stages (e.g., iterations).

In embodiments, a task scheduler (e.g., the task scheduler 110 depicted in FIG. 1) may schedule a large number of executions of a scanning task. For example, in embodiments, the task scheduler may schedule millions of executions of a scanning task each day, each of which may capture large numbers of IP addresses corresponding to activities related to an electronic item. Accordingly, the list, $M_n$ (404), of captured IP addresses may grow to be very large, even over the course of a day, thereby making the calculation of the estimated swarm size, *Nn* (412), a relatively slow task, which may result in slower processing associated with dynamically adjusting the execution frequency.

Embodiments of the invention facilitate faster task scheduler processing by removing the determination of the estimated swarm size from the process flow for adjusting the execution frequency. Through repeated experiment, it has been observed that a function, $h'(K(C_n), R_n)$, may be configured to provide a similar output to that provided by $h(N_n, K(M_n), K(Cn), Rn)$, while significantly reducing the speed of computation. In this manner, embodiments of the present invention enable efficient task scheduling while still collecting the same type of useful information about a swarm. Though, in such embodiments, the task scheduler doesn't determine an estimated swarm size for use in dynamically modifying the execution frequency, an estimated swarm size may be determined periodically and/or in response to a request. For example, a management server (e.g., the management server 102 depicted in FIG. 1) may include a component separate from the task scheduler that is configured to determine an estimated swarm size. In this manner, an estimated swarm size may be provided to customers without compromising efficiency of task scheduling.

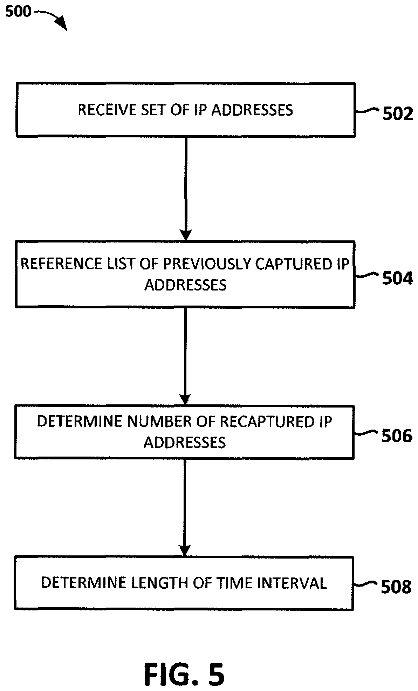

FIG. 5 is a flow diagram depicting an illustrative method 500 of dynamically adjusting an execution frequency used for scheduling executions of a network scanning task, without first determining an estimated swarm size. In embodiments, aspects of the method 500 may be performed by a task scheduler (e.g., the task scheduler 110 depicted in FIG. 1). As shown in FIG. 5, embodiments of the illustrative method 500 include receiving a set of IP addresses (block 502). The task scheduler references a list of previously captured IP addresses (block 504) and determines the number of recaptured IP addresses (block 506). The task scheduler may use the number of IP addresses in the received set and the number of previously captured IP addresses to determine a length of a time interval used for scheduling a subsequent execution time for the scanning task (block 508).

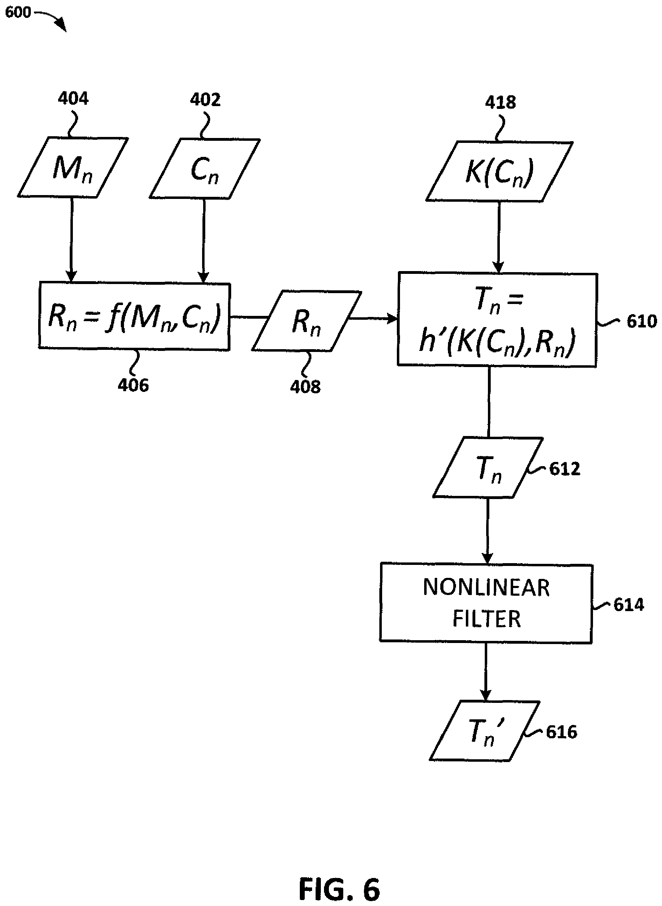

FIG. 6 is a schematic diagram depicting an illustrative process flow 600 for determining a time interval corresponding to an execution frequency used for scheduling executions of a network scanning task. As illustrated in FIG. 6, the illustrative process flow 600 includes the function, $f(M_n, C_n)$ (406), depicted in FIG. 4, for determining a number, $R_n$ (408), of recaptured IP addresses, which is provided as input to a function, $h'(K(C_n), R_n)$ (610), that is used to determine a length, $T_n$ (612), of a time interval to be established between the execution time of the most recent scanning task execution and the execution time of the next scanning task execution. The determined length, $T_n$ (612), may be an initial calculation that may be processed using, for example, a nonlinear filter 614 to determine a filtered length, $T_n'$ (612). The nonlinear filter 614 may be similar to, or include features of, the nonlinear filter 424 depicted in FIG. 4.

The function, $h'(K(C_n), R_n)$ (610), may include any number of different types of functions such as, for example, sample size optimization functions. In embodiments, the function, $h'(K(C_n), R_n)$ (610), may be defined such that a first (e.g., maximum) time interval length is used for scheduling a next scanning task execution if the most recent scanning task execution was unsuccessful (e.g., failed to capture any IP addresses that were not previously captured) and, if the most recent scanning task execution was successful, to scale the time interval length according to the level of success (e.g., number of new unique IP addresses captured) achieved by the execution. For example, the function, $h'(K(C_n), R_n)$ (610), may be defined as follows:

$$T_n = T_{max}\left(\left(\frac{R_n}{K(C_n)}\right)^S - \alpha^{-C_n}\left(\left(\frac{R_n}{K(C_n)}\right)^S - 1\right)\right) \ ;$$

where

$S$ is a function steepness coefficient,
$\alpha$ is a result size coefficient, and
$T_{max}$ is a maximum length of the time interval.

According to embodiments, the constants $S$, $\alpha$, and $T_{max}$ may be selected, and/or dynamically adjusted, to optimize various characteristics (e.g., efficiency, reliability, consistency, and/or the like) of the results of the function, $h'(K(C_n), R_n)$ (610). For example, in an embodiment, $S$ may be selected to be 4, $\alpha$ may be selected to be 1.25, and $T_{max}$ may be selected to be 60 (e.g., representing a maximum time interval length of 60 seconds). As is evident from the formula above, where the scanning task execution, $n$, is the first execution of the scanning task, $T_n = T_{max}$ ($\alpha^{-C_n}$) since $R_n = 0$. Additionally, where the execution, $n$, fails to capture any new IP addresses (e.g., where the execution is unsuccessful), $T_n = T_{max}$.

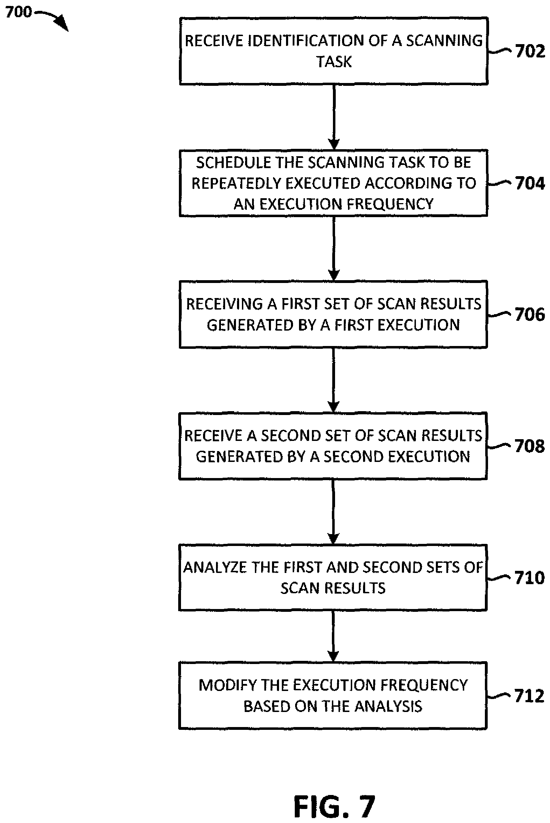

As described above, a task scheduler (e.g., the task scheduler 110 depicted in FIG. 1) may analyze sets of scan results to dynamically adjust an execution frequency used in scheduling multiple executions of a network scanning task. FIG. 7 is a flow diagram depicting an illustrative method 700 of dynamically scheduling executions of a network scanning task. In embodiments, aspects of the method 700 may be performed by a task scheduler (e.g., the task scheduler 110 depicted in FIG. 1) hosted by a management server (e.g., the management server 102 depicted in FIG. 1). As illustrated in FIG. 7, the method 700 includes receiving an identification of a scanning task (block 702) and scheduling the scanning task to be repeatedly executed according to an execution frequency (block 704). In embodiments, the execution frequency may be characterized by a time interval having a first length, which may be used, for example, for scheduling further executions of an unsuccessful scanning task.

As shown, the task scheduler may receive a first set of scan results generated by a first execution of the scanning task (block 706) and may receive a second set of scan results generated by a second execution of the scanning task (block 708). Embodiments of the method 700 further include analyzing the first and second scan results (block 710) and modifying the execution frequency based on the analysis (block 712).

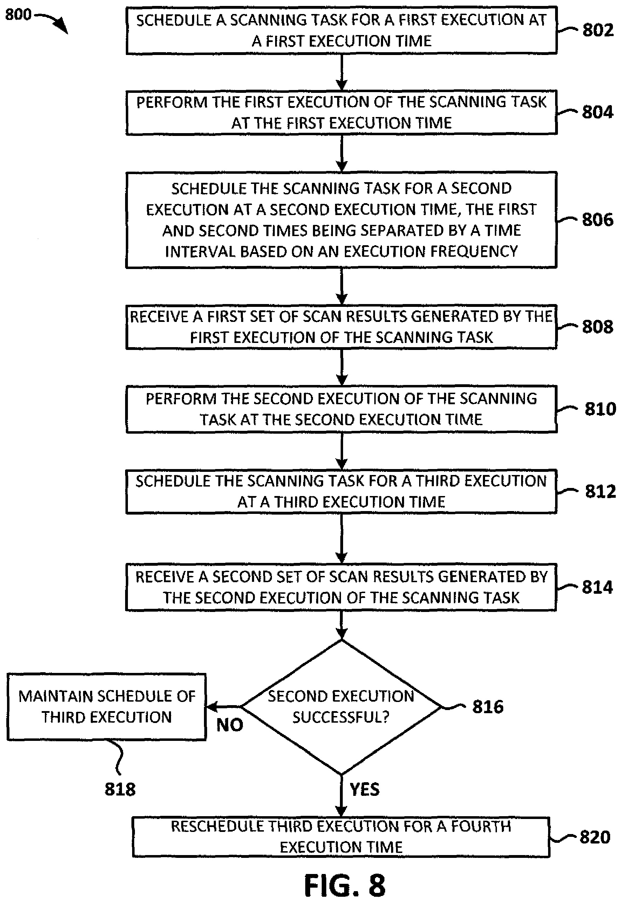

Additional, alternative and overlapping aspects thereof for dynamically scheduling a network scanning task associated with an electronic item are illustrated in FIG. 8. As described above, a task scheduler (e.g., the task scheduler 110 depicted in FIG. 1) may analyze consecutive sets of network scan results to dynamically adjust a time interval between consecutive executions of a network scanning task. FIG. 8 is a flow diagram depicting an illustrative method 800 of dynamically scheduling executions of a network scanning task. As depicted in FIG. 8, embodiments of the illustrative method 800 include scheduling a scanning task for a first execution at a first execution time (block 802) and performing the first execution of the scanning task at the first execution time (block 804).

The task scheduler schedules the scanning task for a second execution at a second execution time (block 806). In embodiments, the first and second execution times are separated by a time interval based on an execution frequency. The task scheduler may receive a first set of scan results generated by the first execution of the scanning task (block 808). The second execution of the scanning task is performed at the second execution time (block 810) and the task scheduler schedules the scanning task for a third execution at a third execution time (block 812). In embodiments, the second and third execution times are separated by a time interval based on the execution frequency.

As shown in FIG. 8, the task scheduler receives a second set of scan results generated by the second execution of the scanning task (block 814) and determines, based on the first and second sets of results, whether the second execution of the scanning task was successful (block 816). In embodiments, for example, a scanning task is successful if it yields information that is unique with respect to information yielded in one or more previous executions of the scanning task. If the second execution of the scanning task was not successful, the third execution of the scanning task remains scheduled for the third execution time (block 818). If the second execution of the scanning task was successful, the task scheduler may reschedule the third execution of the scanning task for a fourth execution time (block 820), where the fourth execution time is separated from the second execution time by a time interval based on a modified execution frequency.

While embodiments of the present invention are described with specificity, the description itself is not intended to limit the scope of this patent. Thus, the inventors have contemplated that the claimed invention might also be embodied in other ways, to include different steps or features, or combinations of steps or features similar to the ones described in this document, in conjunction with other technologies.

For example, in embodiments, when a scanning task is created, it may be immediately scheduled for execution. Additionally, as soon as an execution of a scanning task begins, the next execution may be scheduled. In embodiments, a scanning task may remain in a scheduling queue so that regardless of system errors (e.g., the system dies and is restarted, an execution of the scanning task fails, and/or the like) the scanning task is not lost. According to embodiments, a task scheduler may be configured to automatically deactivate a scanning task upon determining that a predetermined number (e.g., 20) of executions of the scanning task have failed. In embodiments, a deactivated scanning task may be reactivated in response to user input.

## Claims

**1.** A computer-implemented method (700) for dynamically scheduling network scanning tasks, the method comprising:

receiving (702) an identification of a scanning task associated with an electronic item that is accessible via a network (104);
scheduling (704), using a processor (116), the scanning task to be repeatedly executed according to an execution frequency, wherein the execution frequency corresponds to a time interval between each execution of the scanning task;
receiving (706) a first set of scan results generated by a first execution, at a first execution time, of the scanning task, the first set of scan results comprising information associated with a first set of detected activities associated with the electronic item;
receiving (708) a second set of scan results generated by a second execution, at a second execution time, of the scanning task, the second set of scan results comprising information associated with a second set of detected activities associated with the electronic item;
comparing the first and second sets of scan results (710), wherein the information associated with the first and second sets of detected activities associated with the electronic item comprises a first set of network identifiers and a second set of network identifiers, respectively; and
in response to determining that the second set of network identifiers contains network identifiers not included in the first set of network identifiers, increasing the execution frequency (712).

**2.** The method of claim 1, wherein the first set of detected activities associated with the electronic item comprises instances of legally unauthorized access of electronic items via the network (104).

**3.** The method of claim 1, wherein the network comprises a peer-to-peer network.

**4.** The method of claim 3, wherein the scanning task comprises instructions that cause one or more scanning servers (122) to capture IP addresses that are accessing a content hash corresponding to the electronic item.

**5.** The method of claim 1, wherein the network (104) comprises the Internet.

**6.** The method of claim 5, wherein the scanning task comprises instructions that cause one or more scanning servers (122) to search for a uniform resource locator linking to the electronic item.

**7.** The method of claim 1, wherein the first and second sets of network identifiers comprise a first and second set of Internet Protocol (IP) addresses, respectively.

**8.** The method of claim 1, wherein comparing the first and second sets of scan results (710) comprises:

accessing a list, $M_n$, of previously captured network identifiers, wherein the list includes at least the first set of network identifiers;
determining a number, $K(C_n)$, of captured network identifiers in the second set of network identifiers; and
determining a number, $R_n$, of recaptured network identifiers based on a comparison of the network identifiers in the second set of network identifiers and the list, $M_n$, of previously captured network identifiers.

**9.** The method of claim 8, wherein an initial time interval between scans is $T_{max}$, the method further comprising:

determining that $R_n/K(C_n)$ is less than one; and
modifying the execution frequency so that a time interval between scans is less than $T_{max}$.

**10.** The method of claim 8, wherein comparing the first and second sets of scan results (710) further comprises:

determining a number, $K(Mn)$, of device identifiers included in the list of previously captured network identifiers; and
determining an estimated swarm size, $N_n$, based on $K(M_n)$, $R_n$, and $K(C_n)$.

**11.** The method of claim 10, further comprising modifying the execution frequency based on $K(M_n)$ and $N_n$.

**12.** The method of claim 10, wherein determining the estimated swarm size comprises performing a statistical analysis based on a Poisson distribution.

**13.** A system (100) for for dynamically scheduling network scanning tasks the system (100) comprising:

a scanning server (122) configured to execute a network scanning task associated with an electronic item that is accessible via a network (104); and
a management server (102) including a processor (116) and memory (118), the management server (102) configured to:
manage the network scanning task associated with the electronic item by,
receiving (702) an identification of a scanning task associated with the electronic item that is accessible via a network (104);
scheduling (704), using a processor (116), the scanning task to be repeatedly executed according to an execution frequency, wherein the execution frequency corresponds to a time interval between each execution of the scanning task;
receiving (706), from the scanning server (122), a first set of scan results generated by a first execution, at a first execution time, of the scanning task, the first set of scan results comprising information associated with a first set of detected activities associated with the electronic item;
receiving (708), from the scanning server(122), a second set of scan results generated by a second execution, at a second execution time, of the scanning task, the second set of scan results comprising information associated with a second set of detected activities associated with the electronic item;
comparing the first and second sets of scan results (710), wherein the information associated with the first and second sets of detected activities associated with the electronic item comprises a first set of network identifiers and a second set of network identifiers, respectively; and
in response to determining that the second set of network identifiers contains network identifiers not included in the first set of network identifiers, increasing the execution frequency (712).

**14.** The system of claim 13, wherein the management server (102) is further configured to determine an estimated swarm size based at least on the set of device identifiers and the list of previously identified device identifiers.

**15.** The system of claim 13, wherein the scanning task comprises instructions that cause the scanning server (122) to search for a uniform resource locator linking to the electronic item.

**Patentansprüche**

**1.** Computerimplementiertes Verfahren (700) zum dynamischen Planen von Netzwerkabtastaufgaben, wobei das Verfahren Folgendes umfasst:

Empfangen (702) einer Identifikation einer Abtastaufgabe, die einem elektronischen Artikel zugeordnet ist, der über ein Netzwerk (104) zugänglich ist;
Planen (704) unter Verwendung eines Prozessors (116) der Abtastaufgabe, um gemäß einer Ausführungsfrequenz wiederholt ausgeführt zu werden, wobei die
die Ausführungsfrequenz einem Zeitintervall zwischen jeder Ausführung der Abtastaufgabe entspricht;
Empfangen (706) eines ersten Satzes von Abtastergebnissen, die durch eine erste Ausführung zu einer ersten Ausführungszeit der Abtastaufgabe erzeugt werden, wobei der erste Satz von Abtastergebnissen Informationen umfasst, die einem ersten Satz von erfassten Aktivitäten zugeordnet sind, die dem elektronischen Artikel zugeordnet sind;
Empfangen (708) eines zweiten Satzes von Abtastergebnissen, die durch eine zweite Ausführung zu einer zweiten Ausführungszeit der Abtastaufgabe erzeugt werden, wobei der zweite Satz von Abtastergebnissen Informationen umfasst, die einem zweiten Satz von erfassten Aktivitäten zugeordnet sind, die dem elektronischen Artikel zugeordnet sind;
Vergleichen des ersten und des zweiten Satzes von Abtastergebnissen (710), wobei die Informationen, die dem ersten und dem zweiten Satz von erfassten Aktivitäten zugeordnet sind, die dem elektronischen Artikel zugeordnet sind, einen ersten Satz von Netzwerkbezeichnern beziehungsweise einen zweiten Satz von Netzwerkbezeichnern umfassen; und
als Reaktion auf das Bestimmen, dass der zweite Satz von Netzwerkbezeichnern Netzwerkbezeichner enthält, die nicht in dem ersten Satz von Netzwerkbezeichnern beinhaltet sind, Erhöhen der Ausführungsfrequenz (712).

**2.** Verfahren nach Anspruch 1, wobei der erste Satz von erfassten Aktivitäten, die dem elektronischen Artikel zugeordnet sind, Fälle von rechtlich unbefugtem Zugriff auf elektronische Artikel über das Netzwerk (104) umfasst.

**3.** Verfahren nach Anspruch 1, wobei das Netzwerk ein Peer-to-Peer-Netzwerk umfasst.

**4.** Verfahren nach Anspruch 3, wobei die Abtastaufgabe Anweisungen umfasst, die einen oder mehrere Abtastserver (122) veranlassen, IP-Adressen aufzunehmen, die auf einen Inhaltshash zugreifen, der dem elektronischen Artikel entspricht.

**5.** Verfahren nach Anspruch 1, wobei das Netzwerk (104) das Internet umfasst.

**6.** Verfahren nach Anspruch 5, wobei die Abtastaufgabe Anweisungen umfasst, die einen oder mehrere Abtastserver (122) veranlassen, nach einem einheitlichen Ressourcenanzeiger zu suchen, der mit dem elektronischen Artikel verbunden ist.

**7.** Verfahren nach Anspruch 1, wobei der erste und der zweite Satz von Netzwerkbezeichnern einen ersten beziehungsweise zweiten Satz von Internetprotokoll-(IP)-Adressen umfassen.

**8.** Verfahren nach Anspruch 1, wobei das Vergleichen des ersten und des zweiten Satzes von Abtastergebnissen (710) Folgendes umfasst:

Zugreifen auf eine Liste, $M_n$, von zuvor aufgenommenen Netzwerkbezeichnern, wobei die Liste wenigstens den ersten Satz von Netzwerkbezeichnern beinhaltet;
Bestimmen einer Anzahl, $K(C_n)$, von aufgenommenen Netzwerkbezeichnern in dem zweiten Satz von Netzwerkbezeichnern; und
Bestimmen einer Anzahl, $R_n$, von erneut aufgenommenen Netzwerkbezeichnern basierend auf einem Vergleich der Netzwerkbezeichner in dem zweiten Satz von Netzwerkbezeichnern und der Liste, $M_n$, von zuvor aufgenommenen Netzwerkbezeichnern.

**9.** Verfahren nach Anspruch 8, wobei ein anfängliches Zeitintervall zwischen den Abtastungen $T_{max}$ ist, wobei das Verfahren ferner Folgendes umfasst:

Bestimmen, dass $R_n/K(C_n)$ kleiner als eins ist; und
Modifizieren der Ausführungsfrequenz, sodass ein Zeitintervall zwischen den Abtastungen kleiner als $T_{max}$ ist.

**10.** Verfahren nach Anspruch 8, wobei das Vergleichen des ersten und des zweiten Satzes von Abtastergebnissen (710) ferner Folgendes umfasst:

Bestimmen einer Anzahl, $K(M_n)$, von Vorrichtungsbezeichnern, die in der Liste der zuvor aufgenommenen Netzwerkbezeichnern beinhaltet sind; und
Bestimmen einer geschätzten Schwarmgröße, $N_n$, basierend auf $K(Mn)$, $R_n$ und $K(C_n)$.

**11.** Verfahren nach Anspruch 10, ferner umfassend das Modifizieren der Ausführungsfrequenz basierend auf $K(M_n)$ und $N_n$.

**12.** Verfahren nach Anspruch 10, wobei das Bestimmen der geschätzten Schwarmgröße das Durchführen einer statistischen Analyse basierend auf einer Poisson-Verteilung umfasst.

**13.** System (100) zum dynamischen Planen von Netzwerkabtastaufgaben, wobei das System (100) Folgendes umfasst:

einen Abtastserver (122), der konfiguriert ist, um eine Netzwerkabtastaufgabe auszuführen, die einem elektronischen Artikel zugeordnet ist, der über ein Netzwerk (104) zugänglich ist; und
einen Verwaltungsserver (102), einschließlich eines Prozessors (116) und eines Speichers (118), wobei der Verwaltungsserver (102) zu Folgendem konfiguriert ist:
Verwalten der Netzwerkabtastaufgabe, die dem elektronischen Artikel zugeordnet ist, durch Folgendes:

Empfangen (702) einer Identifikation einer Abtastaufgabe, die dem elektronischen Artikel zugeordnet ist, der über ein Netzwerk (104) zugänglich ist;
Planen (704) unter Verwendung eines Prozessors (116) der Abtastaufgabe, um gemäß einer Ausführungsfrequenz wiederholt ausgeführt zu werden, wobei die Ausführungsfrequenz einem Zeitintervall zwischen jeder Ausführung der Abtastaufgabe entspricht;
Empfangen (706) von dem Abtastserver (122) eines ersten Satzes von Abtastergebnissen, die durch eine erste Ausführung zu einer ersten Ausführungszeit der Abtastaufgabe erzeugt werden, wobei der erste Satz von Abtastergebnissen Informationen umfasst, die einem ersten Satz von erfassten Aktivitäten zugeordnet sind, die dem elektronischen Artikel zugeordnet sind;
Empfangen (708) von dem Abtastserver (122) eines zweiten Satzes von Abtastergebnissen, die durch eine zweite Ausführung zu einer zweiten Ausführungszeit der Abtastaufgabe erzeugt werden, wobei der zweite Satz von Abtastergebnissen Informationen umfasst, die einem zweiten Satz von erfassten Aktivitäten zugeordnet sind, die dem elektronischen Artikel zugeordnet sind;
Vergleichen des ersten und des zweiten Satzes von Abtastergebnissen (710), wobei die Informationen, die dem ersten und dem zweiten Satz von erfassten Aktivitäten zugeordnet sind, die dem elektronischen Artikel zugeordnet sind, einen ersten Satz von Netzwerkbezeichnern beziehungsweise einen zweiten Satz von Netzwerkbezeichnern umfassen; und
als Reaktion auf das Bestimmen, dass der zweite Satz von Netzwerkbezeichnern Netzwerkbezeichner enthält, die nicht in dem ersten Satz von Netzwerkbezeichnern beinhaltet sind, Erhöhen der Ausführungsfrequenz (712).

**14.** System nach Anspruch 13, wobei der Verwaltungsserver (102) ferner konfiguriert ist, um eine geschätzte Schwarmgröße basierend auf wenigstens dem Satz von Vorrichtungsbezeichnern und der Liste von zuvor identifizierten Vorrichtungsbezeichnern zu bestimmen.

**15.** System nach Anspruch 13, wobei die Abtastaufgabe Anweisungen umfasst, die den Abtastserver (122) veranlassen, nach einem einheitlichen Ressourcenanzeiger zu suchen, der mit dem elektronischen Artikel verbunden ist.

**Revendications**

**1.** Procédé mis en oeuvre par ordinateur (700) pour planifier dynamiquement des tâches d'analyse de réseau, le procédé comprenant :

la réception (702) d'une identification d'une tâche de balayage associée à un élément électronique qui est accessible via un réseau (104) ;
la planification (704), à l'aide d'un processeur (116), de la tâche de balayage à exécuter de manière répétée selon une fréquence d'exécution, dans lequel la fréquence d'exécution correspond à un intervalle de temps entre chaque exécution de la tâche de balayage ;
la réception (706) d'un premier ensemble de résultats de balayage générés par une première exécution, à un premier temps d'exécution, de la tâche de balayage, le premier ensemble de résultats de balayage comprenant des informations associées à un premier ensemble d'activités détectées associées à l'élément électronique ;
la réception (708) d'un deuxième ensemble de résultats de balayage générés par une deuxième exécution, à un deuxième temps d'exécution, de la tâche de balayage, le deuxième ensemble de résultats de balayage comprenant des informations associées à un deuxième ensemble d'activités détectées associées à l'élément électronique ;
la comparaison des premier et deuxième ensembles de résultats de balayage (710), dans lequel les informations associées aux premier et deuxième ensembles d'activités détectées associées à l'élément électronique comprennent un premier ensemble d'identifiants de réseau et un deuxième ensemble d'identifiants de réseau, respectivement ; et
en réponse à la détermination que le deuxième ensemble d'identifiants de réseau contient des identifiants de réseau non inclus dans le premier ensemble d'identifiants de réseau, l'augmentation de la fréquence d'exécution (712).

**2.** Procédé selon la revendication 1, dans lequel le premier ensemble d'activités détectées associées à l'élément électronique comprend des cas d'accès juridiquement non autorisé d'éléments électroniques via le réseau (104).

**3.** Procédé selon la revendication 1, dans lequel le réseau comprend un réseau pair-à-pair.

**4.** Procédé selon la revendication 3, dans lequel la tâche de balayage comprend des instructions qui amènent un ou plusieurs serveurs de balayage (122) à capturer des adresses IP qui accèdent à un hachage de contenu correspondant à l'élément électronique.

**5.** Procédé selon la revendication 1, dans lequel le réseau (104) comprend l'Internet.

**6.** Procédé selon la revendication 5, dans lequel la tâche de balayage comprend des instructions qui amènent un ou plusieurs serveurs de balayage (122) à rechercher un localisateur de ressources uniforme en liaison avec l'élément électronique.

**7.** Procédé selon la revendication 1, dans lequel les premier et deuxième ensembles d'identificants de réseau comprennent respectivement un premier et un deuxième ensemble d'adresses de protocole Internet (IP).

**8.** Procédé selon la revendication 1, dans lequel la comparaison des premier et deuxième ensembles de résultats de balayage (710) comprend :

l'accès à une liste, $M_n$, d'identifiants de réseau précédemment capturés, dans lequel la liste comprend au moins le premier ensemble d'identifiants de réseau ;
la détermination d'un nombre, $K(C_n)$, d'identifiants de réseau capturés dans le deuxième ensemble d'identifiants de réseau ; et
la détermination d'un nombre, $R_n$, d'identifiants de réseau recapturés d'après une comparaison des identifiants de réseau du deuxième ensemble d'identifiants de réseau et de la liste, $M_n$, des identifiants de réseau précédemment capturés.

**9.** Procédé selon la revendication 8, dans lequel un intervalle de temps initial entre deux balayages est $T_{max}$, le procédé comprenant en outre :

la détermination que $R_n/K(C_n)$ est inférieur à un ; et
la modification de la fréquence d'exécution de telle sorte qu'un intervalle de temps entre les balayages est inférieur à $T_{max}$,

**10.** Procédé selon la revendication 8, dans lequel la comparaison des premier et deuxième ensembles de résultats de balayage (710) comprend en outre :

la détermination d'un nombre, $K(M_n)$, d'identifiants de dispositif inclus dans la liste des identifiants de réseau précédemment capturés ; et
la détermination d'une taille d'essaim estimée, $N_n$, d'après $K(M_n)$, $R_n$ et $K(C_n)$.

**11.** Procédé selon la revendication 10, comprenant en outre la modification de la fréquence d'exécution d'après $K(M_n)$ et $N_n$.

**12.** Procédé selon la revendication 10, dans lequel la détermination de la taille d'essaim estimée comprend la réalisation d'une analyse statistique d'après une distribution de Poisson.

**13.** Système (100) de planification dynamique de tâches de balayage du réseau, le système (100) comprenant :

un serveur de balayage (122) configuré pour exécuter une tâche de balayage du réseau associée à un élément électronique qui est accessible via un réseau (104) ; et
un serveur de gestion (102) comprenant un processeur (116) et une mémoire (118), le serveur de gestion (102) étant configuré pour :

gérer la tâche de balayage du réseau associée à l'élément électronique par la réception (702) d'une identification d'une tâche de balayage associée à l'élément électronique qui est accessible via un réseau (104) ;
la planification (704), à l'aide d'un processeur (116), de la tâche de balayage à exécuter de manière répétée selon une fréquence d'exécution, dans lequel la fréquence d'exécution correspond à un intervalle de temps entre chaque exécution de la tâche de balayage ;
la réception (706), à partir du serveur de balayage (122), d'un premier ensemble de résultats de balayage générés par une première exécution, à un premier temps d'exécution, de la tâche de balayage, le premier ensemble de résultats de balayage comprenant des informations associées à un premier ensemble d'activités détectées associées à l'élément électronique ;
la réception (708), à partir du serveur de balayage (122), d'un deuxième ensemble de résultats de balayage générés par une deuxième exécution, à un deuxième temps d'exécution, de la tâche de balayage, le deuxième ensemble de résultats de balayage comprenant des informations associées à un deuxième ensemble d'activités détectées associées à l'élément électronique ;
la comparaison des premier et deuxième ensembles de résultats de balayage (710), dans lequel les informations associées aux premier et deuxième ensembles d'activités détectées associées à l'élément électronique comprennent un premier ensemble d'identifiants de réseau et un deuxième ensemble d'identifiants de réseau, respectivement ; et
en réponse à la détermination que le deuxième ensemble d'identifiants de réseau contient des identifiants de réseau non inclus dans le premier ensemble d'identifiants de réseau, l'augmentation de la fréquence d'exécution (712).

**14.** Système selon la revendication 13, dans lequel le serveur de gestion (102) est en outre configuré pour déterminer une taille d'essaim estimée d'après au moins l'ensemble des identifiants de dispositif et de la liste des identifiants de dispositif précédemment identifiés.

**15.** Système selon la revendication 13, dans lequel la tâche de balayage comprend des instructions qui amènent le serveur de balayage (122) à rechercher un localisateur de ressources uniforme en liaison avec l'élément électronique.

100
SERVER
108
USER DEVICE
106
CUSTOMER DEVICE
114
NETWORK
104
MANAGEMENT SERVER
PROCESSOR
116
MEMORY
SYSTEM MANAGER
120
TASK SCHEDULER
110
118
DATABASE
124
SERVICES COMPONENT
112
102
SCANNING SERVER
122
SCANNING SERVER
122


FIG. 1

200
SCHEDULE A SCANNING TASK FOR AN EXECUTION AT AN EXECUTION TIME
202
EXECUTE THE SCANNING TASK AT THE EXECUTION TIME
204
SCHEDULE THE SCANNING TASK FOR A NEXT EXECUTION AT A NEXT EXECUTION TIME
206
RECEIVE A SET OF SCAN RESULTS GENERATED BY THE EXECUTION OF THE SCANNING TASK
208
EXECUTION SUCCESSFUL?
210
NO
MAINTAIN SCHEDULE OF NEXT EXECUTION
212
YES
RESCHEDULE NEXT EXECUTION
214

FIG. 2

300

RECEIVE SET OF IP ADDRESSES
302
REFERENCE LIST OF PREVIOUSLY CAPTURED IP ADDRESSES
304
DETERMINE NUMBER OF RECAPTURED IP ADDRESSES
306
DETERMINE ESTIMATED SWARM SIZE
308
DETERMINE LENGTH OF TIME INTERVAL
310

FIG. 3

404
402
418
$M_n$
$C_n$
$K(C_n)$
414
$K(M_n)$
$R_n = f(M_n, C_n)$
$R_n$
$Nn = g(K(M_n), K(C_n), R_n)$
406
408
410
414
$N_n$
412
$K(M_n)$
$T_n = h(N_n, K(M_n), K(C_n), R_n)$
420
$K(C_n)$
418
$T_n$
422
NONLINEAR FILTER
424
400
$T_n'$
426

FIG. 4

500
RECEIVE SET OF IP ADDRESSES
502
REFERENCE LIST OF PREVIOUSLY CAPTURED IP ADDRESSES
504
DETERMINE NUMBER OF RECAPTURED IP ADDRESSES
506
DETERMINE LENGTH OF TIME INTERVAL
508

FIG. 5

600
404
402
418
Mn
Cn
K(Cn)
Rn = f(Mn,Cn)
Rn
Tn =
h'(K(Cn),Rn)
610
406
408
Tn
612
NONLINEAR
FILTER
614
Tn'
616

FIG. 6

700
RECEIVE IDENTIFICATION OF A SCANNING TASK
702
SCHEDULE THE SCANNING TASK TO BE REPEATEDLY EXECUTED ACCORDING TO AN EXECUTION FREQUENCY
704
RECEIVING A FIRST SET OF SCAN RESULTS GENERATED BY A FIRST EXECUTION
706
RECEIVE A SECOND SET OF SCAN RESULTS GENERATED BY A SECOND EXECUTION
708
ANALYZE THE FIRST AND SECOND SETS OF SCAN RESULTS
710
MODIFY THE EXECUTION FREQUENCY BASED ON THE ANALYSIS
712

FIG. 7

800
SCHEDULE A SCANNING TASK FOR A FIRST EXECUTION AT A FIRST EXECUTION TIME
802
PERFORM THE FIRST EXECUTION OF THE SCANNING TASK AT THE FIRST EXECUTION TIME
804
SCHEDULE THE SCANNING TASK FOR A SECOND EXECUTION AT A SECOND EXECUTION TIME, THE FIRST AND SECOND TIMES BEING SEPARATED BY A TIME INTERVAL BASED ON AN EXECUTION FREQUENCY
806
RECEIVE A FIRST SET OF SCAN RESULTS GENERATED BY THE FIRST EXECUTION OF THE SCANNING TASK
808
PERFORM THE SECOND EXECUTION OF THE SCANNING TASK AT THE SECOND EXECUTION TIME
810
SCHEDULE THE SCANNING TASK FOR A THIRD EXECUTION AT A THIRD EXECUTION TIME
812
RECEIVE A SECOND SET OF SCAN RESULTS GENERATED BY THE SECOND EXECUTION OF THE SCANNING TASK
814
SECOND EXECUTION SUCCESSFUL?
816
NO
MAINTAIN SCHEDULE OF THIRD EXECUTION
818
YES
RESCHEDULE THIRD EXECUTION FOR A FOURTH EXECUTION TIME
820

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 13296813 A

### Non-patent literature cited in the description

- Measuring the bittorrent ecosystem: Techniques, tips, and tricks. **KRYCZKA M et al.** IEEE COMMUNICATIONS MAGAZINE. IEEE SERVICE CENTER, 01 September 2011, vol. 49